Europäisches Patentamt

European Patent Office

Office européen des brevets

(11) Publication number: **0 445 308 A1**

# EUROPEAN PATENT APPLICATION
## published in accordance with Art. 158(3) EPC

(21) Application number: 90914436.2

(22) Date of filing: 27.09.90

(86) International application number:
**PCT/JP90/01245**

(87) International publication number:
**WO 91/05396 (18.04.91 91/09)**

(51) Int. Cl.5: **H02K 1/27**

(30) Priority: 27.09.89 JP 249118/89

(43) Date of publication of application:
**11.09.91 Bulletin 91/37**

(84) Designated Contracting States:
**DE FR GB**

(71) Applicant: **FANUC LTD.**
**3580, Shibokusa Aza-Komanba Oshinomura**
**Minamitsuru-gun, Yamanashi 401-05(JP)**

(72) Inventor: **IWAMATSU, Noboru, FANUC**

Mansion Harimomi 7-309
3539-1, Shibokusa, Oshino-mura
Minamitsuru-gun, Yamanashi 401-05(JP)
Inventor: ENDO, Yuichi Fanuc Mansion
Harimomi 7-308
3539-1, Shibokusa Oshina-mura
Minamitsuru-gun Yamanashi 401-05(JP)

(74) Representative: **Otte, Peter, Dipl.-Ing.**
**Tiroler Strasse 15**
**W-7250 Leonberg(DE)**

(54) **STRUCTURE OF ROTOR OF A SYNCHRONOUS MOTOR.**

(57) Variation in the torque of a synchronous motor used in a machine tool leaves trace of machining on the machined surface of a work, and is not desirable. Moreover, difficulty is generally involved in magnetizing the magnets (14) that are stuck to the rotor of the synchronous motor. In this invention, the magnets (20, 30) have a contour of the shape of nearly a parallelogram, and a change in the size in the lengthwise direction (X) relative to a position in the circumferential direction $\theta$ is approximated to a sinusoidal wave. Therefore, the gap between the neighboring magnets is set to be broad, the magnetizing operation is facilitated, and a change in the torque decreases. The change in the torque can be further decreased if the gap $\ell$ between the magnet (20) and the inner periphery (50) of the stator is so formed as to gradually increase from the central position (P1) in the circumferential direction $\theta$ toward both ends.

Fig.1

# TECHNICAL FIELD

The present invention relates to a rotor structure of a synchronous motor.

# BACKGROUND ART

So-called cogging torque occurs due to the presence of the stator slots and the shape of the magnets on the rotor. Further, torque fluctuations occur due to the interaction between the magnetic field produced by the stator coil during conduction and the flux distribution, which is based on the shape of the magnets. These fluctuations in torque pose major problems, particularly in machine tools, where, if the motor is used to drive the rotation of the spindle or the feed mechanism, machining traces corresponding to the torque fluctuations remain on the machined surface of the work, in particular in the finishing processes.

Further, in the process of production of a rotor, in general the magnets are magnetized after being adhered and affixed to the rotor core, but when there is little space between magnets, the magnetization work is not easy.

# DISCLOSURE OF THE INVENTION

Therefore, the present invention has as its object the provision of a rotor structure of a synchronous motor which can reduce the torque fluctuation and which facilitates magnetization work.

In consideration of the above object, the present invention provides a rotor for a synchronous motor of the type where a plurality of magnets are affixed to the surface of the rotor core, wherein the length dimension of the magnets in the longitudinal direction of the rotor changes in a state resembling a sine wave curve in accordance with the circumferential position on the rotor and wherein the gap dimension between the magnets affixed to the rotor core and the stator is gradually reduced the further from the center position of the magnets in the circumferential direction of the rotor to the two ends of the magnets.

In the synchronous motor, if the gap dimension between the rotor and stator is the smallest at the center position of the magnets in the circumferential direction and gradually increases in the directions of the two ends, the change in the interlinkage flux passing through the stator during rotation of the rotor will become smooth and the cogging torque will be reduced. Further, since the shape of the magnets from a plan perspective is skewed as in a parallelogram, the cogging torque is further reduced. The magnets are not only substantially parallelograms in shape, but have longitudinal direction dimensions which change in a manner resembling a sine wave with respect to the circumferential position, so the back electromotive voltage becomes substantially sinusoidal and the torque fluctuations in the case of conduction of a sine wave current are reduced. Further, since the magnets are substantially parallelograms in shape, the gap between adjoining magnets can be set larger and the magnetization work becomes easy.

# BRIEF DESCRIPTION OF THE DRAWINGS

Figure 1 is a view explaining the shape of the magnets seen from a plan perspective according to the present invention;

Fig. 2 is a view showing both another shape seen from a plan perspective of the magnets according to the present invention and a conventional shape;

Fig. 3 is a side view of a conventional rotor;

Fig. 4 is a traverse sectional view of a rotor according to the present invention; and

Fig. 5 is an enlarged view of the surface of the rotor shown in Fig. 4 around the magnets.

# BEST MODE FOR CARRYING OUT THE INVENTION

Below, the present invention will be explained in further detail based on the embodiments shown in the appended drawings. The present invention includes the case where the rotor is at the center of the motor and the case where it is as the outer circumference of the same. Therefore, the magnets may be affixed to the outer circumferential surface of the rotor and affixed to the inner circumferential surface as well.

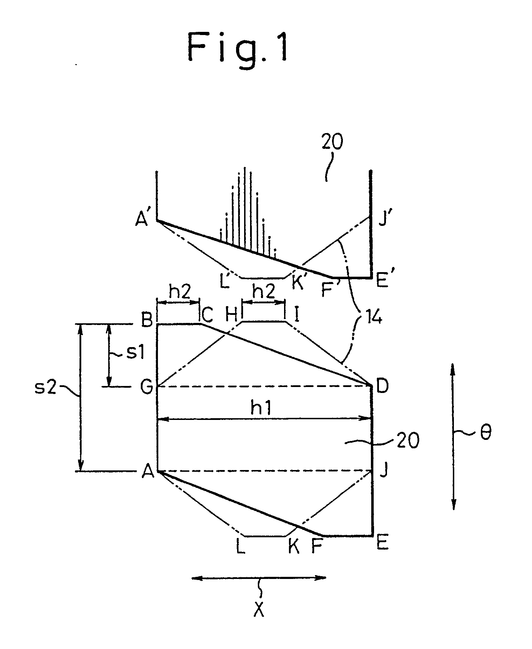

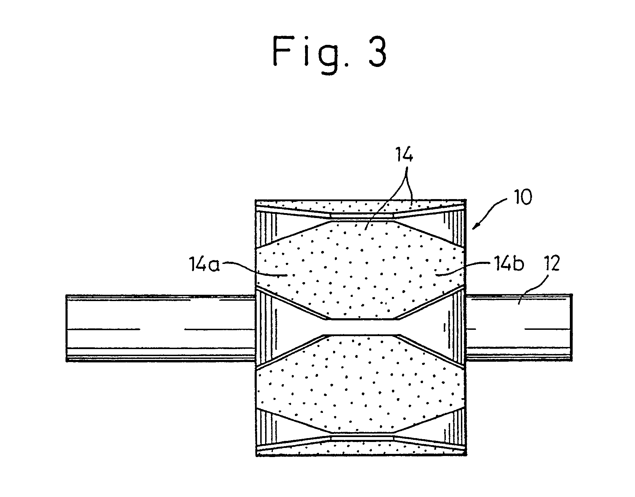

Figure 3 shows a rotor 10, together with a shaft 12, to which conventionally shaped magnets 14 have been affixed by adhesion. To make the back electromotive voltage sinusoidal, in the past the contours of the ends 14a and 14b in the longitudinal direction of the magnets 14, in the planar shape of the magnets, were formed as polygons close to sine waves. A first example of a magnet 14 laid out on a plane is illustrated by the two-dot chain lines of Fig. 1.

However, the shape of the magnets for making the back electromotive voltage sinusoidal in shape does not necessarily require that the ends of the magnets in the longitudinal direction be made sinusoidal in shape or polygons resembling the same. It is all right if the length dimensions of the magnets in the longitudinal direction X form a contour shape which changes sinusoidally in accordance with the position in the circumferential direction θ of the rotor. Based on this concept, a magnet 20 having a contour shape forming a substantial parallelogram according to the present invention is shown by the solid line in Fig. 1. The trapezoid BCDG forming a part of the magnet 20 having the contour shape of the present invention and the trapezoid HIDG forming a part of the magnet 14 of the prior art are formed so that the top flat lengths of the trapezoids are h2 and, as clear from the figure, have bottom flat lengths of the same h1. Further, the heights are both set to S1. Therefore, the length dimensions of the two trapezoids BCDG and HIDG in the X direction (longitudinal direction) are the same regardless of the position of the rotor in the circumferential direction $\theta$. The same applies to the relationship between the two trapezoids EFAJ and KLAJ of the other side, so in the final analysis the waveforms of the back electromotive voltage become the same for the magnet 20 of the contour shape of the present invention and the magnet 14 of the prior art.

Looking at the gap between adjoining magnets, in the magnets 20 of the present invention, the distances of the sides CD and F'A' are clearly larger than the distances of the sides HI and L'K' of the conventional magnet 14. That is, in a magnet having the contour shape of the present invention, magnetization work may be easily performed without reducing the back electromotive voltage.

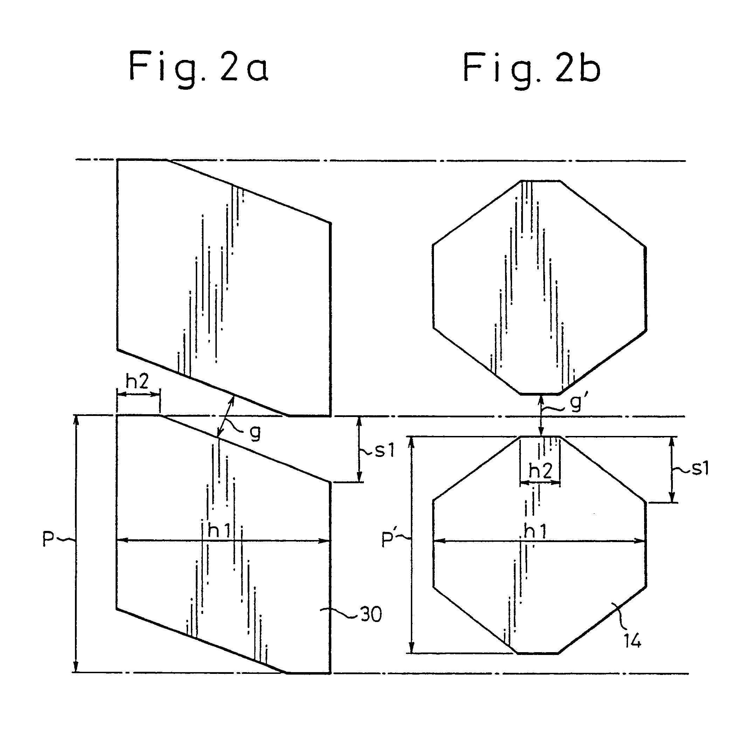

Further, as will be understood from Fig. 1, even if the dimension S2 of the magnets 20 in the $\theta$ direction is made larger than shown in Fig. 1, it is possible to set the gap between adjoining magnets to be larger than the case of magnets of conventional shapes. One example of the shape and dimensions of such a magnet is shown in Fig. 2(a). Figure 2(b) shows a magnet 14 of a conventional shape the same as that shown by the two-dot-chain line of Fig. 1 for purposes of comparison. h2 = h1/10. This embodiment assumes a motor of 4.5 slots per pole with a width dimension g' of 0.5 slot and a width dimension g of substantially 1 slot in the case of a width dimension P of 4.5 slots, a width dimension P' of 4.0 slots, and a width dimension S1 of 1.4 slots. Finding the back electromotive voltage in the case of use of both the magnets 30 and 14 of the two shapes and dimensions by simulation, back electromotive voltages of substantially sinusoidal forms are obtained in both cases and the magnitude of the back electromotive voltage is increased 6.3 percent in the case of the magnet 30 compared with the case of the conventional magnet 14. That is, in the magnet 30 shown in Fig. 2(a), the magnetization work becomes easier than with the conventional magnet 14 and further a back electromotive voltage of a substantially sinusoidal shape and a magnitude larger than the prior art can be obtained.

Since the magnet explained above is substantially a parallelogram in the plane perspective shape, the torque fluctuations at times of nonconductance, that is, the cogging torque, is reduced and, in turn, it is possible to reduce the torque fluctuations in the case of turning the rotor under conduction. However, there are limits to the reduction of the cogging torque just by tinkering with the plan perspective shape of the magnets. The following has been done to obtain a smoother torque.

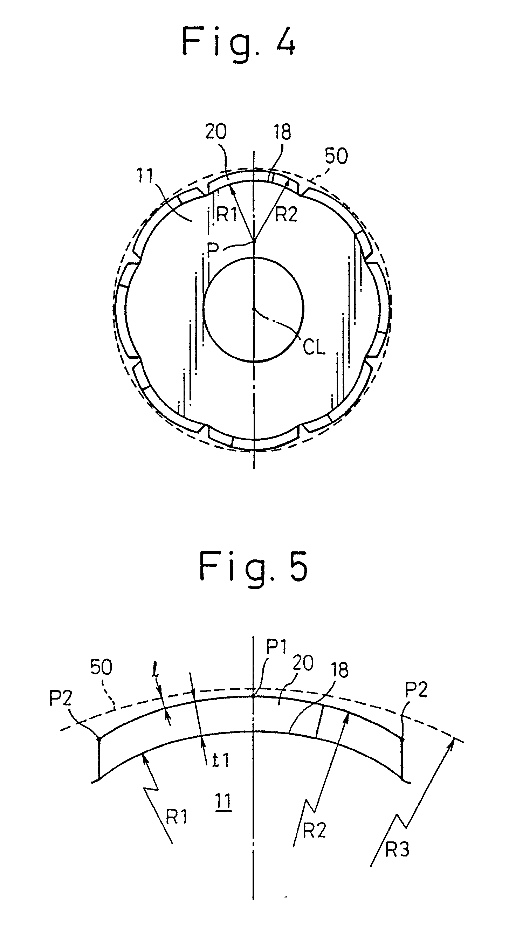

Referring to Fig. 4 and Fig. 5, a rotor having adhered and affixed to the outer circumference* of the rotor core 11 magnets 20 of the shape shown in Fig. 1 (of course magnets 30 of Fig. 2 are also possible) is shown togther with the innder circumference 50 of the stator, shown by broken lines with the slots omitted. This embodiment shows the case where the thickness dimension t1 of the magnet 20 is made constant so as to facilitate the production of the magnet 20. The rotor core 11 is formed in its circumferential direction with eight arcs 18 of a radius R1, centered on the point P offset in the radial direction from the centerline of rotation (CL) of the rotor. The number 8 corresponds to the eight field poles of the embodiment illustrated and it will be clear that the present invention is not limited to the case of the embodiment. The magnet 20, in outer circumferential shape, is formed with a radius R2 = (= R1 + t) based on the point P, which radius R2 is smaller than the radius R3 of the inner circumference 50 of the stator.

Therefore, the gap dimension $\ell$ between the magnet 20 and the stator inner circumference is the smallest at the center position P1 in the circumferential direction as illustrated in Fig. 5 and gradually increases toward the two ends P2. Therefore, when the rotor turns, the magnetic resistance with respect to the flux occurring from the magnets serving as the field poles changes smoothly and as a result the change of the interlinkage flux of the stator also becomes smooth and the cogging torque is reduced.

In the above case, the thickness t1 of the magnet 20 was made constant, but when the thickness is the largest at the center position and becomes thinner the closer to the two ends P2, the outer shape of the rotor core 11 clearly may be a circular one with a center at the center of rotation CL of the rotor. Further, even in the case of a synchronous motor of the type where the rotor is at the outside and the stator is at the inside, various forms where the gap between the magnet and the stator is the smallest at the center position and gradually increases toward the two ends may be easily conceived of. These all are in the scope of the present invention.

As clear from the above explanation, according to the present invention, the plan perspective shape of the magnets and the gap dimension between the rotor and the stator gradually changes in the circumferential direction, so the cogging torque is reduced, and the length dimension of the magnets in the plan perspective shape changes sinusoidally, so the torque fluctuations are reduced when a sine wave current is passed. Further, since the magnets are shaped as substantially parallelograms, the magnetization work is easy and therefore sufficient magnetization can be performed, contributing to generation of large torques.

LIST OF REFERENCE NUMERALS

| 10 | rotor |
| 14, 20, 30 | magnet |
| 50 | stator inner circumference |
| X | longitudinal direction |
| θ | circumferential direction |

**Claims**

1. A rotor structure of a synchronous motor of a type where a plurality of magnets are affixed to the surface of a rotor core, said rotor structure of a synchronous motor characterized in that the length dimension of the magnets changes in a state resembling a sine wave curve in accordance with the circumferential position on the rotor, in that the contour of the magnets forms a substantial parallelogram, and in that the gap dimensions between the magnets fixed to the rotor core and the stator is gradually increased the further toward the two ends of the magnets from the center positions of the magnets in the circumferential direction of the rotor.

2. A rotor structure of a synchronous motor as set forth in claim 1, wherein the width dimension of the magnets in the circumferential direction is the same as the dimension of the pitch of arrangement of the magnets on the rotor.

3. A rotor structure of a synchronous motor as set forth in claim 1, wherein the thickness of the magnets is constant and the surface portions of the rotor where the magnets are affixed comprise protrusions at which the gap dimension with the stator is smallest at the center position in the circumferential direction of the surface portions and gradually increases toward the two ends of the surface portions.

4. A rotor structure of a synchronous motor as set forth in claim 2, wherein the thickness of the magnets is constant and the surface portions of the rotor where the magnets are affixed comprise protrusions at which the gap dimension with the stator is smallest at the center position in the circumferential direction of the surface portions and gradually increases toward the two ends of the surface portions.

# Fig.1

# Fig. 2a

# Fig. 2b

# Fig. 3

# Fig. 4

# Fig. 5

# INTERNATIONAL SEARCH REPORT

International Application No PCT/JP90/01245

## I. CLASSIFICATION OF SUBJECT MATTER (if several classification symbols apply, indicate all) 6

According to International Patent Classification (IPC) or to both National Classification and IPC

Int. Cl⁵ H02K1/27, 501

## II. FIELDS SEARCHED

### Minimum Documentation Searched 7

| Classification System | Classification Symbols |
|---|---|
| IPC | H02K1/27, 501 |

### Documentation Searched other than Minimum Documentation to the Extent that such Documents are Included in the Fields Searched 8

| | |
|---|---|
| Jitsuyo Shinan Koho | 1940 - 1990 |
| Kokai Jitsuyo Shinan Koho | 1972 - 1990 |

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| Y | JP, A, 63-186549 (Fanuc Ltd.), August 2, 1988 (02. 08. 88), Line 17, upper right column, page 238 to line 12, lower left column, page 239 (Family: none) | 1-4 |
| Y | JP, A, 58-123355 (Fujitsu Fanuc, Ltd.), July 22, 1983 (22. 07. 83), Line 5, upper left column to line 12, lower right column, page 314 (Family: none) | 1-4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| December 17, 1990 (17. 12. 90) | January 14, 1991 (14. 01. 91) |

| International Searching Authority | Signature of Authorized Officer |
|---|---|
| Japanese Patent Office | |

Form PCT ISA:210 (second sheet) (January 1985)